# EUROPEAN PATENT APPLICATION

(11) **EP 3 141 119 A1**
(43) Date of publication of application: **15.03.2017**
(21) Application number: 15190910.8
(22) Date of filing: 21.10.2015
(51) Int. Cl.: A01N 43/40, A01P 7/04

(54) **APPLICATION OF A NICOTINE-CONTAINING PREPARATION AS AN AGENT PROTECTING AGAINST HORSE-CHESTNUT LEAF MINER**

(30) Priority: 08.09.2015 PL 41387415
(71) Applicant: Instytut Agrofizyki im. Bohdana Dobrzanskiego Polskiej Akademii Nauk, 20-290 Lublin (PL)
(72) Inventor: Rudko, Tadeusz, 20-562 Lublin (PL); Compa, Magdalena, 20-152 Lublin (PL)
(74) Representative: Kalita, Lucjan

(57) **Abstract**

Application of nicotine as an agent protecting against horse-chestnut leaf miner, through spraying, characterised in that 5 to 10% water solution of the preparation is applied, the composition of the preparation being as follows: 4.5-5.5% nicotine, 65-75% ethylene glycol, and 23-27% glycerine, the water solution having nicotine concentration from 0.23% for young trees to 0.55% for older trees. The spraying is performed in spring, just after the formation of leaves.

## Description

The subject of the invention is an application of a preparation containing nicotine as an agent protecting against horse-chestnut leaf miner, especially common horse-chestnut trees.

A problem that directly affects common horse-chestnut trees is the occurrence of the horse-chestnut leaf miner (Cameraria ohridella) - a moth from the family Gracillariidae, feeding on common horse-chestnut trees. The insect can also feed on red horse-chestnut and yellow buckeye, and it also develops on sycamore and Norway maple trees. The species has already dispersed throughout all of Europe.

The pest develops through five larval stages. The first 3 stages are of the "sap-feeder" type, where the larvae feed on the sap of the leaves, while the larvae of subsequent stages are of the "tissue-feeder" type, i.e. the larvae feed on the leaf tissues. Usually there are three generations of the moth in a year, the spring, the summer and the autumn generation.

The pupae survive the winter in fallen leaves. The adult form of the moths of the first generation emerges in mid-April, when horse-chestnut trees have produced inflorescences. Mass emergence of the moths takes over several consecutive days and lasts for approximately 2 weeks. The moths concentrate on tree trunks and copulate on the lower branches of the trees. After several days the females lay eggs of the spring generation. Larvae develop within 2-3 weeks. The larvae create mines in leaves in the form of narrow corridors. Over time the individual mines merge so that a large area of a common mine is created in which numerous larvae live. At the end of June there takes place the mass emergence of the spring generation, lasting until the beginning of August. The last eggs of the summer generation are laid simultaneously with the first eggs of the autumn generation. The eggs are laid on leaves of the central and upper zones of the tree crowns. In strong cases of colonisation of horse-chestnut trees up to 100% of the leaves can be mined.

There is a strong competition for food among the larvae. Due to the shortage of green tissue, the rate of larvae mortality increases in the summer generation. Insects from the second generation often do not find enough space on strongly colonised trees and the population breaks down with the summer generation. If there is a third generation, the period of its development lasts from mid-September to mid-October. However, the rate of mortality of that generation is high due to the shortage of food and to the beginning of frosts. If the larvae get to the stage of pupation, the pupae enter a 6-month period of rest. Adult caterpillars pupate inside the mines. There may be several hundred mines in a single leaf, which results in leaf shedding. Due to the appearance of 2 to 4 generations a year, with high fecundity and a lack of a natural enemy, the devastation of trees caused by the foraging of the pest attains the level of an epidemics already within a few years from its arrival in a new territory. In the case of a very high level of damage to the horse-chestnut, there is a high threat that the moth, searching for a new host-tree, will colonise another species, e.g. the Norway maple.

Until now no effective method of the pest control has been developed.

At present, for the purpose of limitation of the occurrence of the pest it is recommended to remove and utilise fallen leaves in which the pupae hibernate.

In addition, the method of microinjection of a chemical preparation to the trunks of horse-chestnut tress is applied - endotherapy. The method permits a several-fold reduction of the level of damage. The effectiveness of the treatment can be enhanced by applying the preparation at an optimum time, i.e. March-April. So far the preparation approved for application was the preparation Treex 200 SL, produced by Best-Pest, containing abamectin.

Attempts have also been made at injecting a gel insecticide with imidacloprid, discouraging the pests from foraging on the leaves.

Patent description PL208438 describes an insecticide preparation designed for fumigation and for injection to trees and soil, containing a solution with the following composition: 1 - 10% imidacloprid, 10 - 50% benzyl alcohol, 10 - 50% propylene carbonate, 10 - 50% propylene glycol and/or polypropylene glycols, 0 - 50% water, and 0 - 20% auxiliary compounds from the group of surfactants, antioxidants, pigments, or odorants.

Hole drilling in trees is a controversial issue as it leads to wounding the tree, the consequence of which is further lowering of its resistance and also the initiation of defensive reactions, such as embolism, which results in reduced possibility of systemic dispersal of the agent.

In addition, imidacloprid used in those preparation, belonging to the group of neonicotinoids, is considered to be harmful or even toxic to honeybees.

The known applications of imidacloprid includes also direct injection of the chemical preparation to the soil, point-wise between the roots, at a pressure of 3 atm., or else in the form of a suspension used for irrigation within the reach of the tree crown. Products based on imidacloprid include, for example, Confidor 200 SL, produced by Bayer Cropscience AG, or Pro-Agro 100 SL, produced by Sharda Polska Sp. z o.o., which are effective at doses of 0.14g/l and 0.28 g/cm of trunk diameter of young horse-chestnut trees, applied at the beginning of May.

Another known method is the use of large-area sticky traps, placed in spring on tree trunks to the height of about 2 m, consisting in the tree trunks being wrapped around with foil coated with orchard glue or the preparation called Lasolep. The glue wraps trap adult insects on its surface as the insects move up the tree trunk. The shortcoming of the method is its lack of selectivity with relation to other insects, the result being that a large amount of other, useful insects are also trapped on the glue.

Due to the fact that horse-chestnut trees occur in places generally accessible to people, full protection consisting in the application of chemical preparations against horse-chestnut leaf miner is difficult. The register of approved plant protection agents based on chemical compounds from the group of neonicotinoids lists preparations based on acetamiprid or tiacloprid, or the most widely used imidacloprid, or on thiamethoxam and clothianidin. All of those compounds are harmful to insects.

The objective of the invention was to develop a method of protection against horse-chestnut leaf miner, based on biological methods making use of natural responses of insects to specific chemical and physical stimuli. Such methods give the possibility of maintaining pest populations below the threshold of economic injury level, without killing the herbivores. Such methods include the use of repellents.

The essence of applying a preparation containing nicotine as an agent protecting against horse-chestnut leaf miner through spraying is that one applies a 5 to 10% water solution of the preparation with the composition of: 4.5-5.5% nicotine, 65-75% ethylene glycol, and 23-27% glycerine, the water solution having nicotine concentration from 0.23% for young trees to 0.55% for older trees. In addition, the spraying is performed in spring, as early as possible just after the formation of leaves. In the case of older trees the spraying is applied on the lower crown or on the entire crown, with the use of e.g. a cherry-picker-type elevator lifting a person with a turbine sprayer to a required height. The preparation protects the leaves coated with it, and also gets transported systemically to the remaining parts of the tree crown.

Spraying performed at an early date, before the inflorescences have developed, permits to achieve the best effects and allows to avoid the contact of pollinating insects with the nicotine.

The preparation containing nicotine is characterised by an insect-repelling odour. The repellent effect of the preparation prevents approaching adult horse-chestnut leaf miner moths from laying eggs on the leaves of horse-chestnut trees and the foraging of its larvae, and thus disturbs its development. This causes a disruption of the development cycle of the insect. The use of the preparation results in a reduction of the population of the pest to a level below the threshold of economic injury.

The use of the preparation containing nicotine has been presented on examples of practical application, and the favourable effects are illustrated in photographs where:
Fig.1 presents one-year old seedlings of horse-chestnut sprayed with the preparation with nicotine concentration of 0.25% - no visible damage,
Fig.2 presents one-year old horse-chestnut trees sprayed with the preparation with nicotine concentration of 0.20% - visible damage to the leaves,
Fig.3 presents one-year old horse-chestnut trees sprayed with the preparation with nicotine concentration of 0.15% - visible extensive damage to the leaves,
Fig.4 presents non-sprayed one-year old horse-chestnut tree - visible total damage to the leaves.
Fig.5 presents several-years old neighbouring horse-chestnut trees in June: non-sprayed on the left (visible damage to the leaves) and sprayed with the preparation with nicotine concentration of 0.30% on the right,
Fig.6 presents several-years old neighbouring horse-chestnut trees from Fig.5 in August: non-sprayed on the left, in the background (visible extensive damage to the leaves) and sprayed with the preparation with nicotine concentration of 0.30% on the right, in the foreground.

### Example I

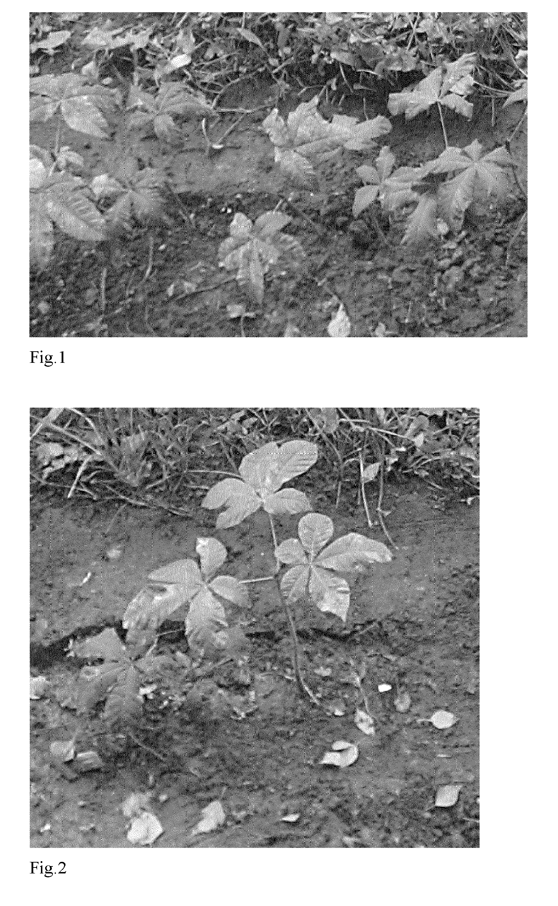

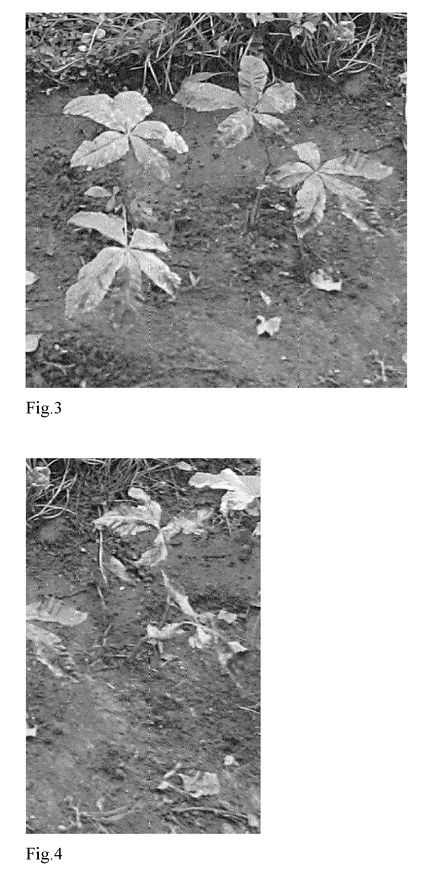

Water solutions were prepared of the preparation with the composition of 5% nicotine, 70% ethylene glycol, and 25% glycerine, and with concentrations of 5%, 4% and 3%, so that nicotine concentration in the ready solutions was 0.25%, 0.2% and 0.15%, respectively. The solutions prepared as above were used to spray, by means of a turbine sprayer, one-year old horse-chestnut trees, in early spring, just after the formation of leaves. The effects of the application of the preparation are presented in Fig.1 - Fig.4.

### Example II

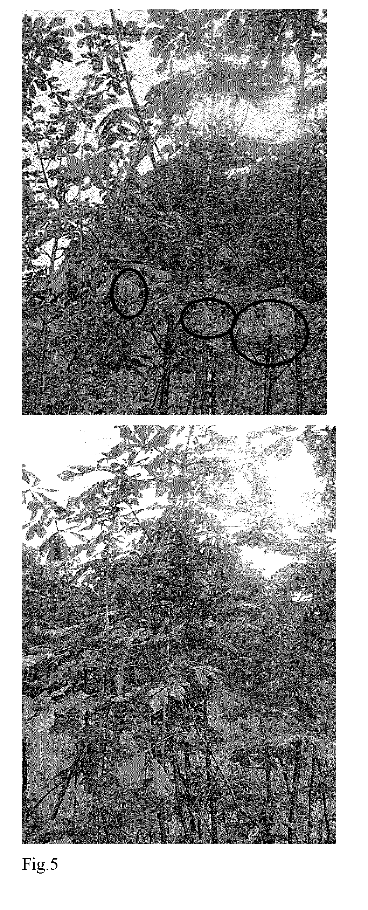

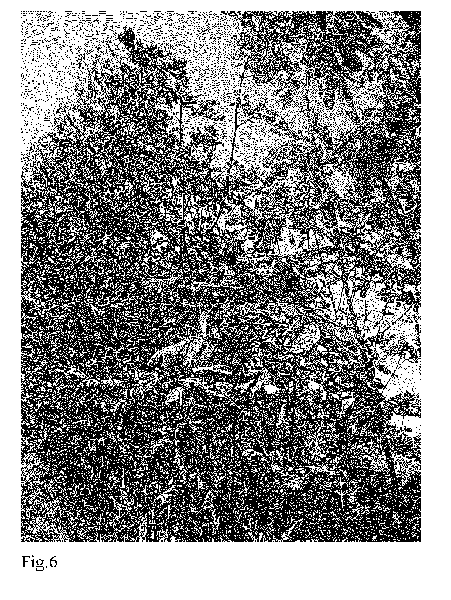

Water solution was prepared of the preparation with the composition of 5% nicotine, 70% ethylene glycol, and 25% glycerine, and with concentration of 6%, so that nicotine concentration in the ready solution was 0.3%. The solution prepared as above was used to spray, by means of a turbine sprayer, one-year old horse-chestnut trees, in early spring, just after the formation of leaves. The effects of the application of the preparation are presented in Fig.5 and Fig.6.

### Example III

Water solution was prepared of the preparation with the composition of 5% nicotine, 70% ethylene glycol, and 25% glycerine, and with concentration of 10%, so that nicotine concentration in the ready solution was 0.5%. An older horse-chestnut tree was sprayed with the solution prepared as above, by means of a garden blower/vacuum cleaner, adapting it for the purpose by extending the outlet air tube with additional 2.5 m sections of plastic tubing. The spraying was performed on the lower part of tree crown, in early spring, just after the formation of leaves. A positive effect of the preparation was observed in comparison to non-sprayed trees.

## Claims

1. pplication of nicotine as an agent protecting against horse-chestnut leaf miner, through spraying, **characterised in that** 5 to 10% water solution of the preparation is applied, the composition of the preparation being as follows: 4.5-5.5% nicotine, 65-75% ethylene glycol, and 23-27% glycerine, the water solution having nicotine concentration from 0.23% for young trees to 0.55% for older trees, and the spraying is performed in spring, just after the formation of leaves.
